# EUROPEAN PATENT APPLICATION

(11) **EP 1 566 666 A1**
(43) Date of publication of application: **24.08.2005**
(21) Application number: 03772857.3
(22) Date of filing: 18.11.2003
(51) Int. Cl.: G02B 1/00, G02B 3/00

(54) **PLASTIC LENS AND METHOD PRODUCTION THEREOF**

(30) Priority: 18.11.2002 JP 2002333640
(71) Applicant: SEIKO EPSON CORPORATION, Tokyo 163-0811 (JP)
(72) Inventor: TODA, Mitsuhiro, c/o Seiko Epson Corporation, Suwa-shi, Nagano 392-8502 (JP); KINOSHITA, Jun, c/o Seiko Epson Corporation, Suwa-shi, Nagano 392-8502 (JP); TAKESHITA, Katsuyoshi, c/o Seiko Epson Corporation, Suwa-shi, Nagano 392-8502 (JP)
(74) Representative: Melzer, Wolfgang
(86) International application number: PCT/JP2003/014652
(87) International publication number: WO 2004/046769

(57) **Abstract**

The present invention includes a plastic lens having a plastic lens base material, a primer layer formed on the plastic lens base material, and a hard coat layer formed on the primer layer, the hard coat layer being formed from a hard coat composition having (A) an inorganic fine particle having a particle diameter of 1 to 100 millimicrons, (B) an organic silicon compound expressed in terms of a specified Formula (1), (C) a multi-functional epoxy compound, and (D) a curing catalyst.

Such a plastic lens is excellent in shock impact resistance by including the primer layer and also shows improvements in scratch resistance, water resistance, and permanence properties while keeping the coloring properties of the hard coat layer of a colorable type.

## Description

### Technical Field

The present invention relates to a plastic lens, particularly to a plastic lens that has a hard coat layer capable of being colored and that is also excellent in shock impact resistance and to the manufacturing method thereof.

### Background Art

Plastic lenses are widely used in the field of spectacle lenses due to lightweight, good formability, good processability, and good coloring properties as well as being hard-to break and also highly safety, as compared with glass lenses.

Plastic lenses, however, are soft and very easy to scratch, and thus are being improved in scratch resistance by applying a hard coat layer with high hardness to the surface of a plastic lens. Further, for the purpose of preventing surface reflection, an anti-reflection coating on which inorganic material is vacuum deposited is also put on the surface of a hard coat layer in some cases. Because of such a surface-treating layer for a plastic lens, the quality of a plastic lens is high.

Nonetheless, a plastic lens subjected to surface treatment with a hard coat layer or an anti-reflection coating has the disadvantage of shock impact resistance being lowered, as compared to a plastic lens having absolutely no surface treating layer. In particular, a lens with a minus power lens, i.e., the center of the lens being thin, is extremely decreased in shock impact resistance leading to the disadvantage of being easily broken. When the thickness of the center is made large to improve the disadvantage, the thickness of the peripheral portion (edge thickness) of the lens is very large, and so the appearance is not preferable. Also, the weight of the lens becomes large, and a feel of using the glasses is lowered so that the practically is not preferable. In recent years, the development of plastic lens base materials with large refractive indexes have progressed, which can make small the center and edge thickness of a lens; however, a plastic base material with a large index of refraction has disadvantages of shock impact resistance being low and of being easily broken.

In order to dissolve these problems, placing a primer layer between the plastic lens material and the hard coat layer is proposed. Originally, the primer layer is a layer for improving adhesion properties between the plastic lens base material and the hard coat layer, but the shock impact resistance of the plastic lens can be improved by selecting a specific resin as the primer layer.

Related art documents of these primer layers include, for example, Japanese Patent Laid-open Nos. Sho 61-114203, Sho 63-87223, Sho 63-141001, Hei 3-109502, and 2000-144048.

In addition, hard coat layers are divided into a colorable type capable of coloring and a non-colorable type incapable of coloring. A colorable type hard coat layer has the advantage of freely coloring a plastic lens by coloring the hard coat layer according to a purchaser's desire after the finished plastic lens without coloring is supplied to a purchaser.

For that reason, some purchasers are requesting plastic lenses having a hard coat layer of a colorable type. In addition to this, the plastic lens is desired to be excellent in shock impact resistance.

As such, plastic lenses that have a hard coat layer of a colorable type and that are excellent in shock impact resistance are required on the market.

However, a plastic lens having coloring properties and offering an improvement in shock impact resistance by placing the above-described primer layer between the plastic lens base material and the hard coat layer of a colorable type has the following disadvantages.

First, a hard coat layer of a colorable type poses problems of the hardness being low and of the scratch resistance being inferior to that of a hard coat layer of a non-coloring type, due to containing coloring components. Making small the amount of blending of coloring components increases the hardness, whereas the coloring properties become poor.

In addition, a hard coat layer when being colored is sometimes immersed in a high-temperature coloring solution. On this occasion, there is a problem of cracks occurring for the hard coat layer poor in water resistance and in hot water resistance.

Furthermore, the adhesion properties between the primer layer and the hard coat layer and further the adhesion properties between the hard coat layer and the anti-reflection coating are insufficient; as a result, these cause a problem of the permanence properties of the plastic lens being inferior.

The present invention is made taking into account the above-described situations, and the object thereof is to provide a plastic lens having excellent shock impact resistance by introducing a primer layer and improving scratch resistance, water resistance, and permanence properties while maintaining the coloring properties of a hard coat layer of a colorable type.

Moreover, the present invention is directed to the provision of a method for manufacturing a plastic lens, which enables the production of such a plastic lens.

### Disclosure of Invention

The present inventor, as a result of earnest studies to attain the above-described object, has found out that in a plastic lens having a primer layer formed on a plastic lens base material and having a hard coat layer formed on the primer layer, it is effective for the hard coat layer to be formed by making use of a hard coat composition containing an inorganic fine particle, an organic silicon compound as a vehicle, a multi-functional epoxy compound as a coloring component and a curing catalyst.

In other words, the coloring properties of a hard coat layer of a colorable type become much higher in the case where the hard coat layer is formed on the plastic lens base material via a primer layer than the case where the hard coat layer of a colorable type is singly layered on the plastic lens base material. For that reason, placing of a primer layer allows a coloring component in a hard coat layer of a colorable type to be reduced, thereby obtaining, in addition to ensure sufficient coloring properties, a plastic lens with higher hardness and thus improved scratch resistance. In this case, sufficient coloring properties can be obtained, with the content of a multi-functional epoxy compound in the solid matter of the hard coat composition being in the range of from 0.1 to 25% by weight.

A multi-functional epoxy compound as a coloring component enables the improvement of water resistance and hot water resistance of a hard coat layer and thus can effectively suppress the generation of cracks during coloring.

In addition, a hard coat layer blended with a multi-functional epoxy compound is particularly excellent in adhesion properties with a primer layer containing as the main component a water borne acryl/urethane resin or as the main component a polyester-based thermoplastic elastomer, and therefore can produce a plastic lens excellent in permanence properties. Furthermore, the presence of the hydroxyl group in a molecule of a multi-functional epoxy compound improves adhesion properties with a primer layer and coloring properties. Thus, the use of a multi-functional epoxy compound containing one or more hydroxyl groups per molecule enables the further reduction of the amount of blending of this multi-functional epoxy compound, and thus can further improve the scratch resistance. Moreover, a hard coat layer containing a multi-functional epoxy compound can improve the shock impact resistance of the plastic lens.

A primer layer containing as the main component a water borne acryl/urethane resin or as the main component a polyester-based thermoplastic elastomer can provide the plastic lens with excellent shock impact resistance as well as being good in water resistance and weather resistance. Also, the primer layer is exceptionally good in adhesion properties with the hard coat layer containing a multi-functional epoxy compound.

### Best Mode for Carrying Out the Invention

Hereinafter, embodiments of a plastic lens of the present invention and the manufacturing method thereof will be set forth; however, the present invention is by no means limited to the following embodiments.

A plastic lens of the present invention, as described above, has a structure having a primer layer formed on a plastic lens base material and having a hard coat layer of a colorable type formed on the primer layer.

Plastic lens base materials are not particularly limited and the illustrative examples can include styrene resin, polycarbonate resin, allyl resin, allyl carbonate resin such as diethylene glycol-bisallyl carbonate resin (CR-39) as well as methacrylic resin, vinyl resin, polyester resin, polyether resin, urethane resin obtained by reacting an isocyanate compound with a hydroxyl compound such as diethylene glycol, thiourethane resin obtained by reacting an isocyanate compound with a polythiol compound, transparent resin obtained by curing a polymerized compound containing a thioepoxy compound having one or more disulfides in the molecule.

A primer layer is preferably water borne acryl/urethane resin or a polyester-based thermoplastic elastomer, which significantly improves the shock impact resistance of a plastic lens and which is excellent in water resistance and light resistance as well as being excellent in adhesion properties with the hard coat layer of a colorable type, as discussed below.

Water borne acryl/urethane resin, which is dispersed in water, refers to a copolymer between an acrylic polyol and a multi-functional isocyanate compound, or a complex between an acrylic polyol and water borne polyurethane resin.

An acrylic polyol stands for copolymer acrylic resin between an acryl monomer having a hydroxyl group and a monomer such as an acryl ester capable of being copolymerized with the acryl monomer having a hydroxyl group. Water borne polyurethane resin is also called water borne urethane resin or a water dispersion type polyurethane, and refers to resin in which urethane resin obtained by reacting a multi-functional isocyanate compound with a polyol is dispersed in water as an emulsion.

Acryl monomers having a hydroxyl group, which are raw material of an acrylic polyol, include 2-hydroxyethyl acrylate, 3-chloro-2-hydroxybutyl acrylate, 2-hydroxybutyl acrylate, 6-hydroxyhexyl acrylate, 2-hydroxyethyl methacrylate, 2-hydroxypropyl methacrylate, 6-hydroxyhexyl methacrylate, and 5,6-dihydroxyhexyl methacrylate. These may be used solely or in a combination of two or more species.

In addition, examples of monomers capable of being copolymerized with an acryl monomer having a hydroxyl group include methyl (metha)crylate, ethyl (metha)crylate, n-propyl (metha)crylate, n-butyl (metha)crylate, isopropyl (metha)crylate, isobutyl (metha)crylate, n-amyl (metha)crylate, n-hexyl (metha)crylate, isoamyl (metha)crylate, trifluoroethyl (metha)crylate, benzyl (metha)crylate, 2-n-butoxyethyl (metha)crylate, 2-chloroethyl (metha)crylate, sec-butyl (metha)crylate, tert-butyl (metha)crylate, 2-ethylbutyl (metha)crylate, cinnamyl (metha)crylate, cyclohexyl (metha)crylate, cyclopentyl (metha)crylate, 2-ethoxyethyl (metha)crylate, furfuryl (metha)crylate, hexafluoroisopropyl (metha)crylate, 3-methoxybutyl (metha)crylate, 2-methoxybutyl (metha)crylate, 2-nitro-2-methylpropyl (metha)crylate, n-octyl (metha)crylate, 2-ethylhexyl (metha)crylate, 2-phenoxyethyl (metha)crylate, 2-phenylethyl (metha)crylate, phenyl (metha)crylate, tetrahydrofurfuryl (metha)crylate, tetrapyranyl (metha)crylate, acryl-based monomers such as acrylic acid and methacrylic acid, and further ethylene-based monomers such as acrylonitrile, vinyl acetate, vinylpyridine, vinylpyrrolidone, methyl crotonate, maleic anhydride, styrene, and α-methylstyrene. Additionally, (metha)crylate refers to acrylate or methacrylate.

An acrylic polyol can be obtained by polymerizing an acryl monomer having the hydroxyl group thereof with a monomer capable of being copolymerized therewith by means of the well-known polymerizing process such as the bulk polymerizing process, the solution polymerizing process, or the emulsification polymerizing process. In particular, the emulsification polymerizing process is preferable in that a large molecular weight polymer, which is difficult to produce by solution polymerization, is obtainable, in addition to directly producing a water borne acrylic polyol.

In addition, in order to obtain water borne polyurethane resin of a self-emulsifiable type, together with an acrylic polyol, a compound having a carboxyl group and at least two active hydrogen atoms in the molecule is preferably used. These compounds include, for example, 2,2-dimethylol propionic acid, 2,2-dimethylol butyric acid, 2,2-dimethylol valeric acid, dioxymaleic acid, and 2,2-dimethylol butanoic acid. These compounds may be used solely or in a combination of two or more species.

On the other hand, multi-functional isocyanate compounds include diisocyanates such as toluene diisocyanate, diphenylmethane diisocyanate, 3,3'-dimethyl-4,4'-diphenylene diisocyanate, 1,5-naphtalene diisocyanate, tolidine diisocyanate, hexamethylene diisocyanate, isophorone diisocyanate, dicyclohexylmethane diisocyanate, norborane diisocyanate, p-phenylene diisocyanate, t-cyclohexane-1,4-diisocyanate, xylene diisocyanate, water-added xylene diisocyanate, water-added diphenylmethane diisocyanate, lysine diisocyanate, tetramethylxylene diisocyanate, trimethylhexamethylene diisocyanate, and 1,3-bis(isocyanatemethyl) cyclohexane; and triisocyanates such as triphenylmethane triisocyanate, tris(isocyanatephenyl) thiophosphate, lysine ester triisocyanate, 2-isocyanateethyl-2,6-diisocyanate hexanoate, 1,6,11-undecane triisocyanate, 1,8-diisocyanate-4-isocyanate methyloctane, 1,3,6-hexametylene triisocyanate, and bicycloheptane triisocyanate. Moreover, urethane modified species obtained from these diisocyanates and triisocyanates are usable. Urethane modified species include adduct species, urethidione species (dimer), isocyanurate species (trimer), carbodiimide, allophanate modified species, urea modified polyisocyanates, buret modified polyisocyanates, and isocyanate prepolymers (semiprepolymers). Furthermore, urethane modified species include block isocyanates prepared by blocking polyisocyanates with blocking agents such as acetylacetone, dimethylmalonate, diethylmalonate, 2,4-hexanedione, 3,5-heptanedione, acetoxime, methylethylketoxime, pucnoneoxime, and caprolactam.

Of these, aliphatic diisocyanate compounds and alicyclic diisocyanates are preferable from the viewpoint of weather resistance, and, for example, isophorone diisocyanate, dicyclohexylmethane diisocyanate, norborane diisocyanate, and hexamethylene diisocyanate are preferable.

There is a method for obtaining water borne acryl/urethane resin that involves, for example, reacting an acrylic polyol, as appropriate, another polyol, the aforementioned compound having a carboxyl group and at least two active hydrogen atoms, a multi-functional isocyanate compound, which is stoichiometrically excessive relative to the hydroxyl group, and a catalyst in an organic solvent to produce an acryl modified urethane prepolymer having a carboxyl group and having an isocyanate group at a terminal, neutralizing the resultant solution with a neutralizing agent to make the material water borne, dispersing this water borne urethane prepolymer in water, and further polymerizing the prepolymer with a chain-extending agent to obtain a water borne acryl/urethane copolymer composition of a self-emulsifiable type.

Polyols other than acrylic polyols include, for example, polyester-based polyols, polycarbonate-based polyols, and polyether-based polyols. These polyols can be used solely or in a combination of two or more species.

Polyester-based polyols include, for example, polyethylene adipate, polyethylene propylene adipate, polybutylene adipate, polyethylene butylene adipate, polyhexamethylene adipate, polydiethylene adipate, polyethylene terephthalate, polyhexamethylene isophthalate adipate, polyethylene succinate, polybutylene succinate, polyethylene sebacate, polybutylene sebacate, poly- ε-caprolactonediol, poly-3-methyl-1,5-pentylene adipate, or polyester polyols having a terminal hydroxyl group produced from polycondensation compounds or the like between 1,6-hexanediol and a dimer acid.

In addition, polycarbonate-based polyols can include, for example, polyhexamethylene carbonate diol.

Furthermore, polyether-based polyols include, for example, homopolymers, block copolymers, and random copolymers of polyethylene glycol, polypropylene glycol, polytetramethylene glycol, and the like.

The aforementioned catalysts include dimethyltin dilaurate, stannous octoate, dibutyltin-2-ethylhexoate, triethylamine, triethylenediamine, and N-methylmorpholine. One or two or more species of these can be used.

Moreover, examples of neutralizing agents include amines such as trimethylamine, triethylamine, tri-n-propylamine, tributylamine, and triethanolamine, potassium hydroxide, sodium hydroxide, and ammonia.

Additionally, examples of chain extending agents include low molecular weight multi-functional alcohols such as ethylene glycol, 1,4-butanediol, 1,6-hexanediol, trimethylolpropane, pentaerythritol, and sorbitol, and further low molecular weight polyamines such as ethylenediamine, propylenediamine, hexamethylenediamine, diaminocyclohexylmethane, piperazine, 2-methylpiperazine, isophoronediamine, diethylenetriamine, and triethylenetetramine. These can be used singly or in a combination of two or more species.

In the case of the amount of blending of compound having a carboxyl group and at least two active hydrogen atoms, the content of carboxyl groups in the resin is preferably from 0.3 to 5% by weight, particularly preferably from 0.5 to 1.5% by weight.

Illustrative examples of commercialized products of water borne acryl/urethane resin of a self-emulsifiable type can include Neosticker 400, Neosticker 700, and X-7200 (trade name; all the products from Nicca Chemical Co., Ltd.). This water dispersion type polyurethane undergoes a further improvement in water resistance by adding a crosslinking agent that reacts with the carboxyl group such as an aqueous oxazoline-based crosslinking agent, an aqueous (poly) carbodiimide-based crosslinking agent, or an aqueous epoxy resin-based crosslinking agent.

In addition, a method that does not use a compound having a carboxyl group and at least two active hydrogen atoms is present. The method entails reacting an acrylic polyol, as appropriate, another polyol, a multi-functional isocyanate compound, which is stoichiometrically excessive relative to the hydroxyl group, and a catalyst in an organic solvent to produce an acryl modified urethane prepolymer having an isocyanate group at a terminal, dispersing this urethane prepolymer in water with a surfactant, and further polymerizing the prepolymer with a chain-extending agent to obtain a water borne acryl/urethane copolymer composition of a forced emulsifiable type.

Furthermore, another method obtaining water borne acryl/urethane resin is present. The method involves reacting an acrylic polyol containing in the above-mentioned ratio the aforementioned compound having a carboxyl group and having at least two active hydrogen atoms with a multi-functional isocyanate compound in a equivalent ratio of the isocyanate group to the active hydrogen group being from 0.8:1 to 1.2:1, neutralizing the carboxyl groups with the above-described neutralizing agent and subsequently water dispersing the polyurethane.

Additionally, a method without using a compound having a carboxyl group and having at least two active hydrogen atoms exists. The method includes reacting an acrylic polyol with a multi-functional isocyanate compound in a equivalent ratio of the isocyanate group to the active hydrogen group being from 0.8:1 1 to 1.2:1, and then dispersing the resultant polyurethane resin in water using a surfactant to yield water borne acryl/urethane resin.

Still additionally, there is a method involving, for example, emulsion polymerizing an acryl monomer in the presence of water borne polyurethane resin to obtain a complex emulsion, which is a complex having a core shell structure between an acrylic polyol and water borne polyurethane resin.

This method includes, for example, reacting an acrylic polyol containing in the above-mentioned ratio the aforementioned compound having a carboxyl group and having at least two active hydrogen atoms with a multi-functional isocyanate compound in a equivalent ratio of the isocyanate group to the active hydrogen group being from 0.8:1 to 1.2:1, neutralizing the carboxyl groups with the above-described neutralizing agent, and subsequently water dispersing the polyurethane. In the water-based medium in the presence of this water dispersed polyurethane is placed an acryl monomer and the resulting mixture is polymerized with a polymerization initiator to be capable of obtaining water borne acryl/urethane resin having a core shell structure.

Furthermore, water borne acryl/urethane resin can be obtained as well by simply blending water borne polyurethane resin with an acrylic polyol emulsion obtained by the emulsification polymerizing process.

Because the refractive index of water borne acryl/urethane resin is about 1.5, due to recently making larger the refractive index of a plastic lens base material, applying directly water borne acryl/urethane resin as a primer layer on a plastic lens base material having a refractive index of about 1.7 produces a interference fringe on account of the primer layer. For that reason, adjusting the refractive index is preferable by blending a fine particle of a metal oxide with the primer layer.

Illustrative examples of these metal oxide fine particles include one oxide fine particle or two or more oxide fine particles or one composite fine particle selected from the group consisting of Si, Al, Sn, Sb, Ta, Ce, La, Fe, Zn, W, Zr, In, and Ti. Specifically, examples can include materials that are made by colloidally dispersing an inorganic oxide fine particle such as SiO₂, SnO₂, Sb₂O₅, CeO₂, ZrO₂, or TiO₂ in a dispersing medium such as water, alcohols, or other organic solvents, or include materials that are prepared by colloidally dispersing a composite fine particle composed of two or more inorganic oxides selected from the group consisting of Si, Al, Sn, Sb, Ta, Ce, La, Fe, Zn, W, Zr, In, and Ti in water, alcohols, or other organic solvents. The particle diameter of every particle is suitably from about 1 to about 300 mµ.

Furthermore, in order to enhance the dispersion stability in a coating liquid, a material prepared by treating this fine particle surface with an organic silicon compound or an amine-based compound can be made use of as well.

Organic silicon compounds used on this occasion include single-functional silanes, two-functional silanes, three-functional silanes, and four-functional silanes. When a silane is treated, a hydrolytic group may be untreated or may be hydrolyzed. In addition, after the treatment, the state in which the hydrolytic groups are allowed to react with the -OH groups of the fine particles is preferable, but a state in which some even remain unreacted does not cause any problem in stability.

Additionally, amine-based compounds include ammonium, alkyl amines such as ethylamine, triethyl amine, isopropyl amine, and n-propyl amine; aralkyl amines such as benzyl amine; alicyclic amines such as piperidine; alkanol amines such as monoethanolamine and triethanolamine.

The amount of addition of these organic silicon compound and amine compound is preferably within the range of about 1 to about 15% based on the amount of the fine particle.

The percentage of metal oxide fine particle in the solid matter of a primer liquid is from 0 to 65% by weight, particularly desirably 55% by weight or less. When the percentage exceeds 65% by weight, the primer layer becomes whitish, which worsens the appearance in some cases.

A method for forming a primer layer on a plastic lens base material involves, for example, placing, as appropriate, a metal oxide fine particle in an aqueous solution containing water borne acryl/urethane resin, and as required diluting the resulting material with a solvent to prepare a primer liquid to be used. The solvents for the use include solvents such as alcohols, esters, ketones, ethers, and aromatic compounds. In addition, a variety of additives that are conventionally well known such as a leveling agent can be included. The primer liquid thus prepared is applied to a plastic lens base material by means such as spin coating or dipping, and after the drying, a curing method can be carried out.

On the other hand, examples of polyester-based thermoplastic elastomers can be found in Japanese Patent Laid-open No. 2000-144048.

A polyester-based thermoplastic elastomer includes a multi-block copolymer in which the hard segment uses a polyester and in which the soft segment uses a polyether or a polyester. The weight ratio of the hard segment (H) to the soft segment (S) is from H/S = 30:70 to 90:10, desirably from 40:60 to 80:20.

A polyester as a component of the hard segment composition basically includes a dicarboxylic acid and a low molecular weight glycol. dicarboxylic acids include aromatic dicarboxylic acids such as terephthalic acid, isophthalic acid, phthalic acid, and 2,6-naphthalene dicarboxylic acid; straight chain saturated aliphatic dicarboxylic acids having a carbon number of 4 to 20 such as succinic acid, adipic acid, azelaic acid, decamethylene dicarboxylic acid, and octadecane dicarboxylic acid; aliphatic oxocarboxylic acids such as ε-hydroxycaproic acid; dimer acids (dibasic acids prepared by dimer polymerizing an aliphatic monocarboxylic acid having a double bond) and these ester-forming derivatives. Even of these, terephthalic acid and 2,6-naphthalene dicarboxylic acid are desirably used.

In addition, low molecular weight glycols include aliphatic glycols such as ethylene glycol, trimethylene glycol, 1,4-butanediol, 1,5-pentanediol, 1,6-hexanediol, neopentyl glycol; aliphatic glycols such as 1,6-cyclohexanedimethanol; and these ester-forming derivatives. Of these, ethylene glycol and 1,4-butanediol are desirably used.

A polyester as a component of the soft segment composition includes a dicarboxylic acid and a long chain glycol, and dicarboxylic acids include the above-mentioned species. Long chain glycols include poly(1,2-butadiene glycol), poly(1,4-butadiene glycol), and the hydrogen additives thereof. Moreover, ε-caprolactone (C6), enantholactone (C7), and caprolirolactone (C8) are useful as polyester components as well. Of these, ε-caprolactone is desirably used.

Polyethers as components of the soft segment composition include poly(alkylene oxide) glycols such as poly(ethylene oxide) glycol, poly(1,2-propyleneoxide) glycol, poly(1,3-propyleneoxide) glycol, and poly(tetramethyleneoxide) glycol. Of these, poly(tetramethyleneoxide) glycol is desirably used.

A method for producing a polyester-based thermoplastic elastomer involves, for example, heating a lower alkyl ester of a dicarboxylic acid, an aliphatic long chain glycol, and an excessive low molecular weight glycol in the presence of tetrabutyltitanate or the like as a catalyst at a temperature of 150 to 200°C to carry out an ester exchange reaction, first forming a low polymer and further heating and agitating this low polymer in a high vacuum at 220 to 280°C to conduct polycondensation and to obtain the polyester-based thermoplastic elastomer. The aforementioned low polymer can also be obtained by a direct esterification reaction of a dicarboxylic acid, a long chain glycol, and a low molecular weight glycol.

A polyester-based thermoplastic elastomer can be mixed with other polymers for use, for example, arbitrarily with normal ester-based resin (PBT, PET, or the like), amide-based resin, and further amide-based thermoplastic elastomers. Normally, the content of polyester-based thermoplastic elastomer based on all the polymers is less than 50%, desirably below 30%.

A polyester-based thermoplastic elastomer can be changed to prepare a primer composition of a solution type. However, in terms of processability and environmental protection, a primer composition of an aqueous emulsion is desirable for use. Making an emulsion water-soluble can be performed by a well-known process. Specifically, the forcing emulsifying process is desirable in which a high mechanical shear is applied to a polymer to forcibly be emulsified in the presence of a surfactant (external emulsifying agent).

A primer composition is desirable to contain a metal oxide fine particle (including a composite fine particle) for the purpose of adjusting the refractive index and improving the strength, and the like. For the metal oxide fine particle, species illustrated in the above-described water borne acryl/urethane resin are similarly usable.

The primer liquid thus prepared is applied to a plastic lens base material by means such as spin coating or dipping, and after the drying, a curing method can be carried out.

The film thickness of a primer containing as the main component water borne acryl/urethane resin or a polyester-based thermoplastic elastomer is from 0.01 to 50 µm, particularly preferably from 0.1 to 30 µm. When the primer layer is too thin, the hard coat layer of a colorable type is decreased in improvement in coloring properties and in an improving effect of shock impact resistance. Conversely, if the thickness is too large, the smoothness of the surface is lost or the optical distortion occurs in some cases.

Next, the hard coat layer will be set forth. The hard coat layer in a plastic lens of the present invention is formed from a hard coat composition containing Components (A), (B), (C), and (D) below.

Component (A) includes an inorganic fine particle having a particle diameter of 1 to 100 millimicrons; Component (B) includes an organic silicon compound expressed in terms of Formula (1): 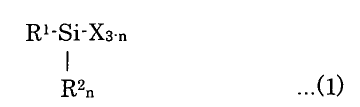 (wherein R¹ is an organic group containing a reaction group capable of being polymerized, R² is a hydrocarbon group having a carbon number of 1 to 6, X is a hydrolyzable group, and n is 0 or 1); Component (C) includes a multi-functional epoxy compound; and (D) includes a curing catalyst.

Illustrative examples of Component (A) of inorganic fine particles include one oxide fine particle or two or more oxide fine particles or one composite fine particle of metals selected from the group of Si, Al, Sn, Sb, Ta, Ce, La, Fe, Zn, W, Zr, In, and Ti. Specifically, examples can include materials that are made by colloidally dispersing an inorganic oxide fine particle such as SiO₂, SnO₂, Sb₂O₅, CeO₂, ZrO₂, or TiO₂ in a dispersing medium such as water, alcohols, or other organic solvents, or include materials that are prepared by colloidally dispersing a composite fine particle composed of two or more inorganic oxides selected from the group of Si, Al, Sn, Sb, Ta, Ce, La, Fe, Zn, W, Zr, In, and Ti in water, alcohols, or other organic solvents. For an object of the present invention, the average particle diameter of 1 to 100 millimicrons is used, preferably a particle with a diameter of 5 to 30 millimicrons is desirable. Furthermore, in order to enhance the dispersion stability in a coating liquid, as described above, a material prepared by treating this fine particle surface with an organic silicon compound or an amine-based compound can be made use of as well.

The kind and the amount of blending of an inorganic fine particle are determined by a desired hardness and reflective index, etc. The amount of blending of the aforementioned inorganic fine particle is from 5 to 80% by weight, particularly desirably from 10 to 50% by weight, relative to the solid matter of the hard coat composition. When the amount of blending of the aforementioned inorganic fine particle is too small, the adhesion properties with the anti-reflection coating become insufficient, or the abrasion resistance of the film is sometimes insufficient. In addition, too large an amount of blending of the aforementioned inorganic fine particle causes cracks in the film and also causes the coloring properties to be insufficient in some cases.

An organic silicon compound of Component (B) serves as a vehicle component. In Formula (1) above, R¹ is an organic group containing a reaction group capable of being polymerized and the reaction groups capable of being polymerized include, for example, a vinyl group, an allyl group, an acryl group, a methacrylic group, an epoxy group, a mercapto group, a cyano group, an isocyano group, and an amino group. R² is a hydrocarbon group having a carbon number of 1 to 6, and the examples include a methyl group, an ethyl group, a butyl group, a vinyl group, and a phenyl group. Additionally, X is a hydrolyzable functional group, and the examples include alkoxy groups such as a methoxy group, an ethoxy group, and a methoxyethoxy group; halogen groups such as a chloro group and a bromo group; and an acyloxy group.

Organic silicon compounds of Component (B) include, for example, vinyltrialkoxysilane, vinyltrichlorosilane, vinyltri(β-methoxy-ethoxy)silane, allyltrialkoxysilane, acryloxypropyltrialkoxysilane, methacryloxypropyltrialkoxysilane, methacryloxypropyldialkoxymethylsilane, γ-glycidoxypropyltrialkoxysilane, β-(3,4-epoxycyclohexyl)-ethyltrialkoxysilane, mercaptopropyltrialkoxysilane, γ-aminopropyltrialkoxysilane, and N-β (aminoethyl)- γ-aminopropylmethyldialkoxysilane. These compounds of Component (B) may be used in a mixture of two or more species. Moreover, the use after hydrolysis is more effective in use.

The amount of use of Component (B) is from 10 to 70% by weight, particularly desirably from 20 to 60% by weight, based on the solid matter of a hard coat composition. Too small an amount of blending of Component (B) causes the adhesion properties with the reflective preventing film to be apt to be insufficient in some cases. On the other hand, too large an amount of blending of Component (B) causes the cured film to be sometimes cracked.

A multi-functional epoxy compound of Component (C) serves as a coloring component for the hard coat layer. A multi-functional epoxy compound is specifically excellent in adhesion properties for water borne acryl-urethane resin and a polyester-based thermoplastic elastomer of the above-described primer layer. Moreover, the presence of a primer layer is much higher in coloring properties than the case where a hard coat layer of colorable type is in a single layer on a plastic lens base material. For that reason, placing a primer layer enables reduction of the amount of blending of a multi-functional epoxy compound in a hard coat of colorable type and ensures sufficient coloring properties, thereby leading to obtaining a plastic lens having further hardness and thus the improvement in scratch resistance. In addition, a multi-functional epoxy compound can improve the water resistance and the hot water resistance of a hard coat layer, and even though the hard coat layer is soaked in a hot coloring solution during coloring for a long while, the occurrence of cracks can be effectively suppressed. Moreover, a hard coat layer containing a multi-functional epoxy compound can improve the shock impact resistance of the plastic lens.

Multi-functional epoxy compounds are widely commercialized for adhesives, cast material, etc. and include, for example, polyolefin-based epoxy resin synthesized by the peroxidation process; alicyclic epoxy resin such as polyglycidyl esters obtained by reactions between cyclopentadieneoxide, cyclohexeneoxide, or hexahydrophthalic acid, and epichlorohydrin; polyglycidyl ether obtained by reactions between polyols and epichlorohydrin, the polyols include polyphenols such as bisphenol A, catechol, and resorcinol, polyalcohols such as (poly)ethylene glycol, (poly)propylene glycol, neopentyl glycol, glycerin, trimethylol propane, pentaerythritol, diglycerol, and sorbitol; epoxidized vegetable oil, epoxy novolac obtained from a reaction between novolac type phenol resin and epichlorohydrin; epoxy resin obtained from a reaction of phenolphthalein and epichlorohydrin; copolymers obtained from glycidylmethacrylate, and a methylmethacrylateacrylic monomer, styrene, etc. and further epoxyacrylates obtained from a glycidyl group ring-opening reaction of the above-described epoxy compounds and methacrylic acid containing a monocarboxylic acid.

Examples of multi-functional epoxy compounds include aliphatic epoxy compounds such as 1,6-hexanediol glycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of hydroxy pivalic acid neopentyl glycol ester, trimethylol propane diglycidyl ether, trimethylol propane diglycidyl ether, trimethylol propane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydroxyethyl)isocyanurate, and triglycidyl ether of tris(2-hydroxyethyl)isocyanurate; alicyclic epoxy compounds such as isophorondiol diglycidyl ether and bis-2,2-hydroxycyclohexylpropane diglycidyl ether; aromatic epoxy compounds such as resorcin diglycidyl ether, bisphenol A diglycidyl ether, bisphenol F diglycidyl ether, bisphenol S diglycidyl ether, diglycidyl orthophthalate, phenol novolac polyglycidyl ether, and cresol novolac polyglycidyl ether.

The presence of a hydroxyl group in the molecule of a multi-functional epoxy compound of Component (C) in the present invention improves adhesion properties with the primer layer and coloring properties. As such, a multi-functional epoxy compound preferably contains a plurality of epoxy groups and one or more hydroxyl groups in the molecule. For example, the aforementioned species that are preferably usable include neopentyl glycol diglycidyl ether, trimethylol propane diglycidyl ether, glycerol diglycidyl ether, diglycerol triglycidyl ether, pentaerythritol diglycidyl ether, pentaerythritol triglycidyl ether, diglycidyl ether of tris(2-hydroxyethyl)isocyanurate, phenol novolac polyglycidyl ether, and cresol novolac polyglycidyl ether. Referring to the present invention, multi-functional epoxy compounds, each containing a plurality of epoxy groups and one or more hydroxyl groups in the molecule, are used singly or in a combination of two or more species, and further the aforementioned compounds can be used in combination with a multi-functional epoxy compound without a hydroxyl group in the molecule.

The amount of blending of a multi-functional epoxy compound of Component (C) is from 5 to 40% by weight relative to the solid matter in a hard coat composition when a hard coat layer is directly applied to a plastic lens base material, whereas in the case of forming the hard coat via a primer layer, the amount of blending of the multi-functional epoxy compound can be reduced to from 0.1 to 25% by weight, preferably from 0.5 to 20% by weight on account of the coloring properties being improved by the presence of the primer layer. Too small an amount of blending of the aforementioned compound renders the water resistance of the film to be insufficient in some cases; on the other hand, too large an amount of blending of the aforementioned compound causes the adhesion properties with the anti-reflection coating to tend to be insufficient in some cases.

A curing catalyst of Component (D) is added as the curing catalyst for a silanol or an epoxy compound, and preferable species include perchloric acids such as perchloric acid, ammonium perchlorate, and magnesium perchlorate; acetylacetonates containing as the central metal atom such as Cu(II), Zn(II), Co(II), Ni(II), Be(II), Ce(III), Ta(III), Ti(III), Mn(III), La(III), Cr(III), V(III), Co(III), Fe(III), Al(III), Ce(IV), Zr(IV), V(IV), etc.; amino acids such as amines and glycine; Lewis acids; and organic acid metal salts. Of these, compositions of the present invention are preferably magnesium perchlorate, acetylacetonates of Al(III), and Fe(III) due to curing conditions, a pot life, etc. The amount of the aforementioned curing catalyst desirably ranges from 0.01 to 5.0% by weight the concentration of the solid matter.

A composition for a hard coat thus obtained can be used, as appropriate, to be diluted in a solvent. Solvents for use include alcohols, esters, ketones, ethers, and aromatic compounds.

Moreover, according to a hard coat composition of the present invention, in addition to the aforementioned components, the application properties and film performance subsequent to curing of the hard coat liquid can be improved, as required, as well by adding a small amount of surfactant, antistatic additive, ultraviolet absorbing agent, antioxidant, dispersing, oil-soluble and fluorescent dyes and pigments, photochromic compounds, and light and heat resistant stabilizers such as hindered amine- and hindered phenol-based species, or the like. In particular, addition of one species or two or more species selected from the group of ultraviolet absorbing agents, antioxidants, and light and heat resistant stabilizers such as hindered amine- and hindered phenol-based species can impart excellent weather resistant properties to a hard coat film.

Applying and curing processes of a hard coat composition include the dipping process, the spinner process, the spraying process, and the flowing process, which involve applying a hard coat composition to a plastic lens base material on which a primer layer is formed, and then heat drying the resulting material at a temperature of 40 to 200°C for hours, and thereby can form a film.

The film thickness of a hard coat layer ranges from 0.05 to 30 µm, particularly preferably from 0.1 to 20 µm. When the film is too thin, the fundamental performance is not performed in some case. On the other hand, if the film is too thick, optical distortion is sometimes generated.

A plastic lens of the present invention can form an anti-reflection coating on the hard coat layer.

An anti-reflection coating is composed of a single layer or a multi-layer of an inorganic film, or an organic film. Materials of the inorganic film include inorganic materials such as SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃, and these can be used solely or in a combination of two or more species. In the case of a plastic lens, SiO₂, ZrO₂, TiO₂, Ta₂O₅ are preferable that are capable of being vacuum evaporated at a low temperature. In addition, a multi-layer film composition preferably has SiO₂ as the outermost layer.

Usable methods for forming an inorganic film include, for example, the vacuum evaporating method, the ion plating method, the spattering method, the CVD method, and a method that entails depositing a film in a saturated solution by chemical reaction. The vacuum evaporating method also makes use of the ion beam assisting method that simultaneously an ion beam is irradiated during evaporation.

The material of an organic film is selected considering the refractive index of a plastic lens and the hard coat layer. In addition to the vacuum evaporation, applying methods excellent in mass production such as the spin coating method and dip coating method can be used for making a film.

Additionally, when forming an anti-reflection coating, the surface of the hard coat layer is desired for being treated. Examples of this surface treatment include acid treatment, alkali treatment, ultraviolet irradiation treatment, plasma treatment by high-frequency electrical discharge in an argon or oxygen atmosphere, and ion beam irradiation treatment with argon, oxygen, nitrogen, or the like.

Furthermore, in order to make the surface of the anti-reflection coating difficult to contaminate, or easy to wipe stains, the use of a fluorine silane-containing compound bearing a perfluoroalkyl group or the like enables the formation of a water repellent film on the anti-reflection coating.

Hereinafter, detailed descriptions will be set forth using examples.

### <Example 1>

### (1) Formation of a primer layer

A commercially available water-based polyester "A-160P" (product of Takamatsu Oil & Fat Co., Ltd.; concentration of solid matter, 25%) of 186 Grams, methanol of 257 g, water of 15 g, and butylcellosolve of 37 g were admixed, then to the resultant mixture were added γ-glycidoxypropyltrimethoxysilane of 5 g and a silicone-based surfactant (product of Nippon Unicar Co., Ltd., trade name "L-7604") of 0.1 g, and the material was stirred for three hours. This primer composition was applied to a plastic lens base material of SEIKO Super Sovereign (trade name; product of Seiko Epson Corporation; refractive index, 1.67) by the immersing method (raising speed, 15 cm/min). The applied base material lens was subjected to heat curing treatment at 100°C for 20 minutes to form a primer layer having a thickness of 1.0 µm on the base material.

### (2) Formation of a hard coat layer

Butylcellosolve of 73 g, methanol of 148 g, and γ-glycidoxypropyltrimethoxysilane of 57 g were mixed. To this mixture solution was dropped a 0.1N aqueous hydrochloric acid solution of 18 g with agitating. The resulting mixture was stirred for another three hours and then was aged during one whole day and night. To this solution were added a methanol-dispersed SiO₂ fine particle sol (product of Catalyst & Chemicals Ind. Co., Ltd.; trade name "Oskal 1132"; concentration of solid matter, 30%) of 146 g, a diglycerol polyglycidyl ether (product of Nagase ChemteX Corporation.; trade name "Denacol EX-421") of 50 g, magnesium perchlorate of 3 g, a silicone-based surfactant (product of Nippon Unicar Co., Ltd., trade name "L-7001") of 0.16 g, and a phenol-based antioxidant (product of Kawaguchi Chemical Industry Co., Ltd., trade name "Antage Crystal") of 0.6 g, and the resulting mixture was mixed for four hours, and then this mixture was aged during one whole day and night to yield a applying solution. This hard coat composition was applied to the plastic lens base material on which the primer layer obtained in (1) was formed, by means of the immersing method (raising speed, 30 cm/min). The base material lens thus applied was subjected to heat curing treatment at 125°C for three hours to thereby form a hard coat layer having a thickness of 2.5 µm on the base material.

### <Example 2>

On the plastic lens obtained in Example 1 were formed an anti-reflection coating and a water repellent film, composed of inorganic material, by the following method.

### (1) Formation of an anti-reflection coating and a water repellent film

On a plastic lens was constructed an anti-reflection multi-layer coating that includes seven layers made by laminating an SiO₂ layer and a TiO₂ layer alternately in the order from the base plate side. Construction of the films of the anti-reflection coating SiOz layer was carried out by the vacuum evaporating method (degree of vacuum, 5.0 × 10⁻⁴ Pa). Making the films of the TiO₂ layer was conducted by the ion assist evaporating method (degree of vacuum, 4.0 × 10⁻³ Pa). The ion assist conditions when making the films of the TiO₂ layer by the ion assist evaporating method includes an acceleration voltage of 520 V, an acceleration current value of 270 mA, and a degree of vacuum of 4.0 × 10⁻³ Pa, which was made kept by introducing oxygen. An anti-reflection coating was constructed by laminating the layers one by one in the following order: the first layer from the base material side is an SiO₂ layer having an optical thickness of 0.083 λ, the second layer is a TiO₂ layer having an optical thickness of 0.07 λ, the third layer is an SiO₂ layer having an optical thickness of 0.10 λ, the fourth layer is a TiO₂ layer having an optical thickness of 0.18 λ, the fifth layer is an SiO₂ layer having an optical thickness of 0.065 λ, the sixth layer is a TiO₂ layer having an optical thickness of 0.14 λ, and the seventh layer is an SiO₂ layer having an optical thickness of 0.26 λ. The design wavelength λ was set to be 520 nm. The reflection-interference colors of the multi-layer film thus obtained turned green and the total light transmittance was 99%.

Furthermore, a water repellent film composed of a fluorine-containing silane compound was formed on the anti-reflection coating by a vacuum evaporating method.

### <Example 3>

### (1) Formation of a primer layer

A primer layer was formed by the method as in the case of Example 1.

### (2) Formation of a hard coat layer

Butylcellosolve of 68 g, methanol of 139 g, and γ-glycidoxypropyltrimethoxysilane of 61 g were mixed. To this mixture solution was dropped a 0.1N aqueous hydrochloric acid solution of 17 g with agitating. The resulting mixture was stirred for another three hours and then was aged during one whole day and night. To this solution were added a methanol-dispersed SiO₂ fine particle sol (product of Catalyst & Chemicals Ind. Co., Ltd.; trade name "Oskal 1132"; concentration of solid matter, 30%) of 181 g, a diglycerol polyglycidyl ether (product of Nagase ChemteX Corporation.; trade name "Denacol EX-421") of 26 g, magnesium perchlorate of 3 g, a silicone-based surfactant (product of Nippon Unicar Co., Ltd., trade name "L-7001") of 0.15 g, a silicone-based surfactant (product of Nippon Unicar Co., Ltd., trade name "L-7604") of 0.05 g, a phenol-based antioxidant (product of Kawaguchi Chemical Industry Co., Ltd., trade name "Antage Crystal") of 0.6 g, and a benzotriazol-based ultraviolet absorbing agent (product of Ciba Specialty Chemicals Co., Ltd., trade name "TINUVIN 213) of 3.7 g. The resulting mixture was mixed for four hours, and then this mixture was aged during one whole day and night to yield an applying solution. This hard coat composition was applied to the plastic lens base material on which the primer layer obtained in (1) was formed, by means of the immersing method (raising speed, 35 cm/min). The base material lens thus applied was subjected to heat curing treatment at 125°C for three hours to thereby form a hard coat layer having a thickness of 2.5 µm on the base material.

### <Example 4>

On the plastic lens obtained in Example 3 were formed an anti-reflection coating and a water repellent film by the method as in Example 2.

### <Example 5>

### (1) Formation of a primer layer

A primer layer was formed by the method as in the case of Example 1.

### (2) Formation of a hard coat layer

A hard coat layer was formed all by the method as in Example 3, with the exception that a diglycerol polyglycidyl ether (product of Nagase ChemteX Corporation.; trade name "Denacol EX-421") was changed into 1,6-hexadiol diglycidyl ether (product of Nagase ChemteX Corporation.; trade name "Denacol EX-212").

### <Example 6>

### (1) Formation of a primer layer

A commercially available aqueous emulsion polyurethane "Neosticker 700" (product of Nicca Chemical Co., Ltd., concentration of solid matter, 37%; acryl-modified polyurethane) of 126 Grams, methanol of 258 g, water of 74 g, and butylcellosolve of 37 g were admixed, and then to the resultant mixture were added 5 g of γ-glycidoxypropyltrimethoxysilane and a silicone-based surfactant (product of Nippon Unicar Co., Ltd., trade name "L-7604") of 0.1 g and the material was stirred for three hours. This primer composition was applied to a plastic lens base material of SEIKO Super Sovereign (trade name; product of Seiko Epson Corporation; refractive index, 1.67) by the immersing method (raising speed, 15 cm/min). The applied base material lens was subjected to heat curing treatment at 100°C for 20 minutes to form a primer layer having a thickness of 1.0 µm on the base material.

### (2) Formation of a hard coat layer

A hard coat layer was formed by the method as in Example 3.

### <Example 7>

On the plastic lens obtained in Example 6 were formed an anti-reflection coating and a water repellent film by the method as in Example 2.

### <Example 8>

### (1) Formation of a primer layer

A primer layer was formed all by the method as in Example 6, with the exception that the plastic lens base material was changed into a plastic lens base material of SEIKO Super Luscious (trade name; product of Seiko Epson Corporation; refractive index, 1.60).

### (2) Formation of a hard coat layer

A hard coat layer was formed all by the method as in Example 3, with the exception that the diglycerol polyglycidyl ether (product of Nagase ChemteX Corporation.; trade name "Denacol EX-421") was changed into a glycerol polyglycidyl ether (product of Nagase ChemteX Corporation.; trade name "Denacol EX-313").

### (3) Formation of an anti-reflection coating and a water repellent film

The plastic lens obtained in (2) was subjected to plasma treatment (argon plasma 400W × 60 sec), and then an anti-reflection multi-layer coating that includes five layers made by laminating an SiO₂ layer and a ZrO₂ layer alternately in the order from the base plate side was constructed. The optical thickness of each layer was formed such that the first SiOz layer, the next ZrO₂ layer and the SiO₂ layer, the film layers of which are equivalent, the next ZrO₂ layer and the uppermost layer of the SiO₂ layer are each λ/4. In addition, the design wavelength λ was set to be 520 nm. The reflection-interference colors of the multi-layer film thus obtained turned green and the total light transmittance was 98%.

Furthermore, a water repellant film composed of a fluorine-containing silane compound was formed on the anti-reflection coating by a vacuum evaporating method.

### <Example 9>

### (1) Formation of a primer layer

A primer layer was formed all by the method as in Example 6, with the exception that the plastic lens base material was changed into a plastic lens base material of SEIKO Prestige (trade name; product of Seiko Epson Corporation; refractive index, 1.74).

### (2) Formation of a hard coat layer

A hard coat layer was formed by the method as in Example 3.

### (3) Formation of an anti-reflection coating and a water repellent film

An anti-reflection coating and a water repellent film were formed by the method as in Example 2.

### <Example 10>

### (1) Formation of a primer layer

A primer layer was formed all by the method as in Example 1, with the exception that the plastic lens base material was changed into a plastic lens base material of SEIKO Super Luscious (trade name; product of Seiko Epson Corporation; refractive index, 1.60).

### (2) Formation of a hard coat layer

A hard coat layer was formed by the method as in Example 3.

### (3) Formation of an anti-reflection coating and a water repellent film

An anti-reflection coating and a water repellent film were formed by the method as in Example 2.

### <Example 11>

### (1) Formation of a primer layer

A primer layer was formed all by the method as in Example 1, with the exception that the plastic lens base material was changed into a plastic lens base material of SEIKO Prestige (trade name; product of Seiko Epson Corporation; refractive index, 1.74).

### (2) Formation of a hard coat layer

A hard coat layer was formed all by the method as in Example 3, with the exception that the diglycerol polyglycidyl ether (product of Nagase ChemteX Corporation.; trade name "Denacol EX-421") was changed into a glycerol polyglycidyl ether (product of Nagase ChemteX Corporation.; trade name "Denacol EX-313").

### (3) Formation of an anti-reflection coating and a water repellent film

An anti-reflection coating and a water repellent film were formed by the method as in Example 8.

### <Comparative Example 1>

A plastic lens was formed all by the method as in Example 3, except that a primer layer was not formed, and except that on a plastic lens base material was formed a hard coat layer in a single layer.

### <Comparative Example 2>

On the plastic lens obtained in Comparative Example 1 were formed an anti-reflection coating, composed of an inorganic material, and a water repellent film by means of the method as in Example 2.

### <Comparative Example 3>

### (1) Formation of a primer layer

A primer layer was formed by the method as in the case of Example 1.

### (2) Formation of a hard coat layer

A hard coat layer was formed all by the method as in the case of Example 3, except that a diglycerol polyglycidyl ether (product of Nagase ChemteX Corporation.; trade name "Denacol EX-421") was changed into a hydrolysate of N,N-bis[(methyldimethoxysilyl)propyl]amine.

### <Comparative Example 4>

### (1) Formation of a primer layer

A primer layer was formed by the method as in the case of Example 1.

### (2) Formation of a hard coat layer

A hard coat layer was formed all by the method as in the case of Example 3, except that a diglycerol polyglycidyl ether (product of Nagase ChemteX Corporation.; trade name "Denacol EX-421") was not added.

### <Comparative Example 5>

On the plastic lens obtained in Comparative Example 4 were formed an anti-reflection coating, composed of an inorganic material, and a water repellent film by means of the method as in Example 2.

Plastic lens obtained by these Examples and Comparative Examples were evaluated in the following.
(a) Appearance, a lens was observed for whitishness, cracks, whitening, etc. with transmitted light and reflected light using a fluorescent lamp against a black background in a dark box.
(b) Scratch resistance, a lens was visually observed for the scratched extent after the sample was subjected to the application of a load of 1 kg with Bonstar #0000 steel wool (product of Nihon Steel Wool Co., Ltd.) and after the sample surface was rubbed 10 times back and forth.
(c) Weather resistance, a lens that has no changes in the surface conditions was considered good after the sample was exposed to a xenon lamp of a sunshine weather meter for 250 hours.
(d) Humidity resistance, a lens that has no changes in the surface conditions was considered good after the sample was allowed to stand for 10 days in 60°C × 99% environments.
(e) Adhesion properties of a surface-treated layer, a lens on which the tests (c) and (d) were conducted was carried out for adhesion properties between a lens base material and the surface-treated layer (the hard coat layer and the anti-reflection coating) by means of cross cut tape testing in accordance with JIS D-0202. In other words, breaks at 1-mm intervals were made on the base material surface with a knife to form 100 one-square-mm squares. Next, cellophane adhesive tape (product of Nichiban Co., Ltd.; trade name "Cellotape" [registered trademark]) was strongly pressed thereagainst, and then the tape was rapidly pulled off in the vertical direction relative to the base material surface. Thereafter, the base material surface was visually observed regarding the squares on which a coated layer remained as an index of adhesion properties.
(f) Shock impact resistance, a hard ball of 16.3 g was naturally fallen at the center of the convex of a lens from a height of 127 cm to check the break of the lens. A lens without breaks or cracks was marked with O. In addition, lenses used in this testing were all 1.1 mm thick at the center of the lens. Furthermore, when the weight of the hard ball was made twice, a lens that did not have breaks or cracks was marked with ⓞ.
(g) Coloring properties, a plastic lens having the outermost surface layer thereof being a hard coat layer was tested. The lens was made immersed in a dispersed dye solution bath of 94 °C for 10 minutes to determine the luminous transmittance with a spectrophotometer. A lens having a luminous transmittance of 30% or less was marked with ⓞ; a lens having a luminous transmittance of 50% or less was marked with ○; a lens having a luminous transmittance of 70% or less was marked with Δ; and a lens having a luminous transmittance of exceeding 70% was marked with ×.
(h) Hot water resistance, a plastic lens was soaked in hot water of 90°C for 60 minutes to visually observe the occurrence of cracks, whitening, etc.

A list of the compositions and the components thereof of the treated layers of Examples and Comparative Examples is tabulated in Table 1, and the test results are shown in Table 2.

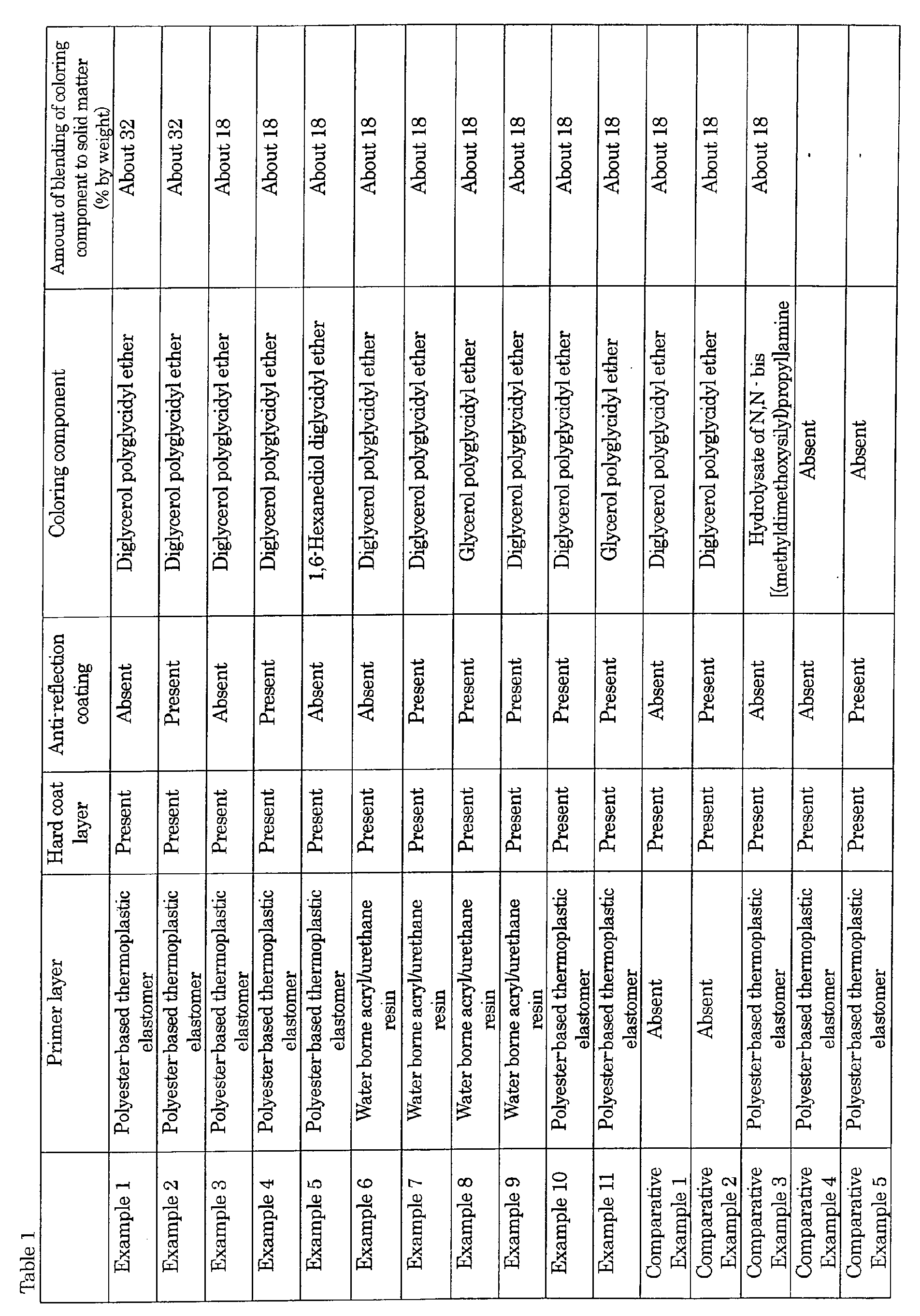

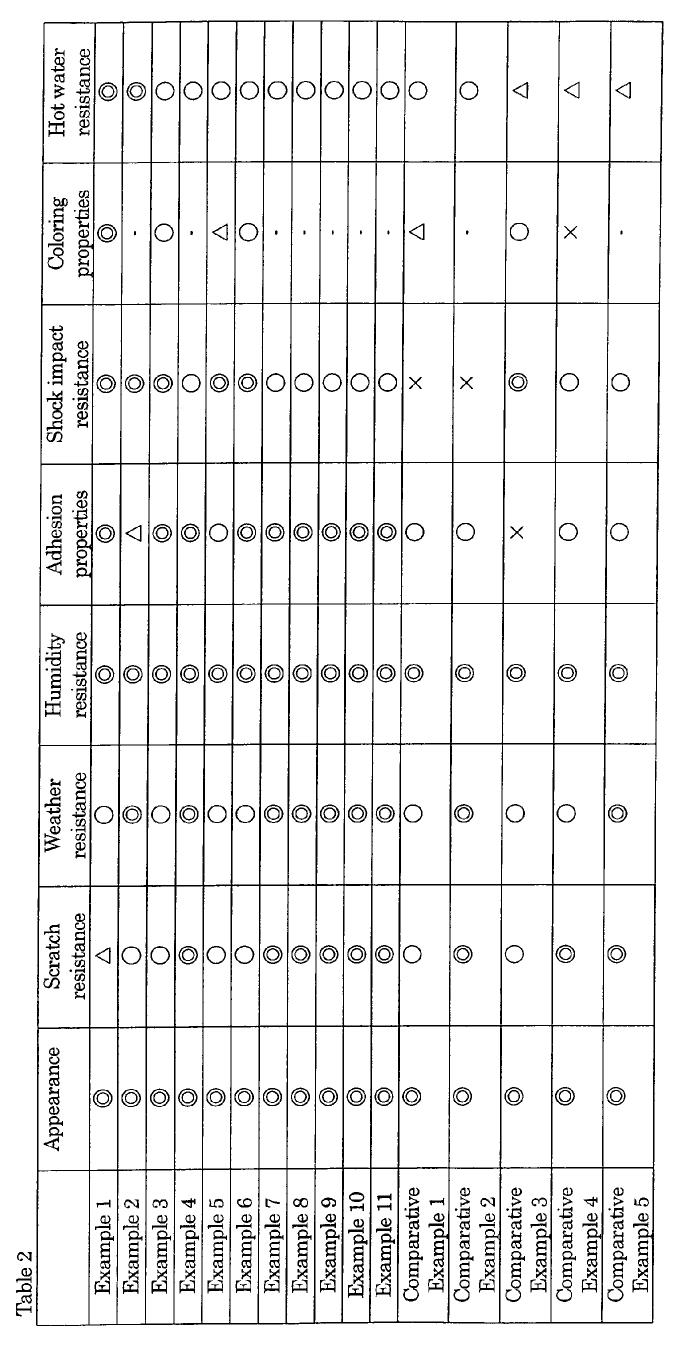

Because the plastic lens of Example 1 includes a large content (about 32% by weight) of a multi-functional epoxy compound in a hard coat, the coloring properties are good, but the scratch resistance is insufficient. In addition, in the plastic lens of Example 2, on which an anti-reflection coating is placed on the lens of Example 1, the shock impact resistance is sufficient. The plastic lens of Example 4, in which an anti-reflection coating is put on the plastic lens of Example 3, the plastic lens of Example 7, in which an anti-reflection coating is put on the plastic lens of Example 6, and further the plastic lenses of Examples 8 to 11, on which an anti-reflection coating each is placed, show decreases in shock impact resistance. This seems to be because the adhesion properties between the hard coat layers and the anti-reflection coatings are insufficient. The lens of Example 3 is a lens that maintains balance of various permanence properties and coloring properties. The plastic lens of Example 4, in which an anti-reflection coating is put on the plastic lens of Example 3, shows further improvement of scratch resistance and weather resistance. The shock impact resistance thereof indicates a slight decrease, but a sufficient level. The lens of Example 5 is slightly low in coloring properties and adhesion properties due to a structure of the multi-functional epoxy compound not containing a hydroxyl group. The plastic lenses of Examples 6 to 11 similarly maintain balance of various properties.

The plastic lenses of Comparative Examples 1 and 2 are low in shock impact resistance on account of no primer layers. In addition, comparison of the lens of Comparative Example 1 that has a structure in which the primer layer is removed from the plastic lens of Example 3 with the lens of Example 3 shows that a primer layer has a large effect on coloring properties. The lens of Comparative Example 3 that makes use of a component other than a multi-functional epoxy compound as a coloring component does not have the adhesion properties with the primer layer. The lens of Comparative Example 4 exhibits almost no coloring properties because of not using a multi-functional epoxy compound. Furthermore, the lens thereof is also low in hot water properties. The plastic lens of Comparative Example 5 in which an anti-reflection coating is placed on the plastic lens of Comparative Example 4 indicates that the hard coat readily suffers from cracks and that the hot water properties are low, although an anti-reflection coating is put.

### Industrial Applicability

A plastic lens of the present invention can be utilized as a spectacle lens that is excellent in shock impact resistance, is safety, and is for eyesight correction.

In addition, a method for producing a plastic lens of the present invention enables production of a spectacle lens that is excellent in such shock impact resistance, is safety, and is for eyesight correction.

## Claims

1. A plastic lens, comprising:
a plastic lens base material;
a primer layer formed on said plastic lens base material; and
a hard coat layer formed on said primer layer, wherein said hard coat layer being formed from a hard coat composition, the hard coat composition comprising:
(A) an inorganic fine particle having a particle diameter of 1 to 100 millimicrons;
(B) an organic silicon compound expressed in terms of Formula (1): 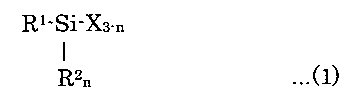 wherein R¹ is an organic group containing a reaction group capable of being polymerized, R² is a hydrocarbon group having a carbon number of 1 to 6, X is a hydrolyzable group, and n is 0 or 1;
(C) a multi-functional epoxy compound; and
(D) a curing catalyst.

2. The plastic lens according to claim 1, wherein
the content of said multi-functional epoxy compound in the solid matter of said hard coat composition is from 0.1 to 25% by weight.

3. The plastic lens according to claim 1, wherein
said primer layer comprises water borne acryl/urethane resin as the main component.

4. The plastic lens according to claim 1, wherein
said primer layer comprises a polyester-based thermoplastic elastomer as the main component.

5. The plastic lens according to claim 1, wherein
said multi-functional epoxy compound includes one or more hydroxyl groups in one molecule.

6. The plastic lens according to claim 1, wherein
the plastic lens comprises an anti-reflection coating on said hard coat layer.

7. A method for manufacturing a plastic lens, comprising:
a step of forming a primer layer on a plastic lens base material; and
a step of forming a hard coat layer on said primer layer from a hard coat composition, the hard coat composition comprising:
(A) an inorganic fine particle having a particle diameter of 1 to 100 millimicrons;
(B) an organic silicon compound expressed in terms of Formula (1): 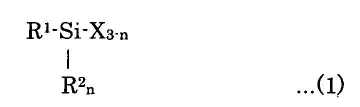 wherein R¹ is an organic group containing a reaction group capable of being polymerized, R² is a hydrocarbon group having a carbon number of 1 to 6, X is a hydrolyzable group, and n is 0 or 1;
(C) a multi-functional epoxy compound; and
(D) a curing catalyst.
